(19) Europäisches Patentamt
European Patent Office
Office européen des brevets

(11) **EP 2 757 847 A1**

(12) **EUROPEAN PATENT APPLICATION**
published in accordance with Art. 153(4) EPC

(43) Date of publication:
**23.07.2014 Bulletin 2014/30**

(51) Int Cl.:
***H04W 72/08*** (2009.01)

(21) Application number: **12847834.4**

(22) Date of filing: **10.09.2012**

(86) International application number:
**PCT/CN2012/081172**

(87) International publication number:
**WO 2013/067847 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2011 CN 201110350430**

(71) Applicant: **Huawei Technologies Co., Ltd Shenzhen, Guangdong 518129 (CN)**

(72) Inventors:
• **LUO, Haiyan**
**Shenzhen**
**Guangdong 518129 (CN)**

• **DENG, Tianle**
**Shenzhen**
**Guangdong 518129 (CN)**
• **TANG, Binsong**
**Shenzhen**
**Guangdong 518129 (CN)**
• **SUN, Yanzan**
**Shenzhen**
**Guangdong 518129 (CN)**

(74) Representative: **Epping - Hermann - Fischer Patentanwaltsgesellschaft mbH Schloßschmidstraße 5 80639 München (DE)**

(54) **METHOD FOR ACCOMMODATING PHYSICAL DOWNLINK CONTROL CHANNEL INTERFERENCE AND BASE STATION THEREOF**

(57) The present invention provides a method and a base station for coordinating physical downlink control channel interference, where, base stations of neighboring cells exchange PDCCH state information or PDCCH performance information, so that a victim cell can identify an aggressive cell according to the above information, and notify the aggressive cell of taking a measure to reduce effect of interference to a PDCCH of the victim cell. Thereby the aggressive cell takes the measure to achieve PDCCH interference coordination, and to reduce the effect of the interference from the aggressive cell to the PDCCH of the victim cell. Or the aggressive cell actively finds that it is a strong interference source to a PDCCH of a certain victim cell, and, accordingly, takes a measure to reduce effect of interference to the PDCCH of the victim cell actively.

EP 2 757 847 A1

A second base station exchanges, with a neighboring cell base station, PDCCH performance information for controlling PDCCH interference coordination

The second base station finds a victim cell base station from the neighboring cell base station according to the exchanged PDCCH performance information 31

The second base station takes a corresponding measure to reduce the interference to the PDCCH of the victim cell base station 32

FIG. 3

**Description**

**TECHNICAL FIELD**

The present invention relates to the field of wireless communication interference coordination technologies, and particularly to a method and a base station for coordinating physical downlink control channel interference.

**BACKGROUND**

In a wireless communication system, a base station such as an eNB (evolved node B), a node B (node B), a BS (Base Station, base station), a BTS (Base Transceiver Station, base transceiver station), an AP (Access Point, access point) or the like transmits data and/or control information on a downlink to a user equipment, such as a UE, an access terminal (access terminal), an access point (access point), a PDA (Personal Digital Assistant, personal digital assistant), a laptop (portable computer) or the like, and receives data and/or control information transmitted by the user equipment on a uplink.

A long term evolution (Long Time Evolution, LTE) wireless communication system is taken as an example.

A base station transmits control information to a UE on a physical downlink control channel (PDCCH, Physical Downlink Control Channel), and the UE reads the control information carried on the PDCCH to know information, such as a paging message, a system message, and a frequency domain resource position for uplink and downlink scheduling.

Then, the UE reads data on its scheduled physical downlink shared channel (PDSCH, Physical Downlink Shared Channel) according to the information. In particular, the base station indicates the number of OFDM symbols the PDCCH actually occupies on a physical control format indicator channel (PCFICH, Physical Control Format Indictor Channel), and a value of the number is generally from 1 to 3. If the number of downlink physical resource blocks (PRB, Physical Resource Block) is less than 10, the above value is from 2 to 4. Generally speaking, the UE knows a time domain starting position of PDSCH time-frequency resources according to the PCFICH, and knows a frequency domain position of the PDSCH time-frequency resources allocated to the UE according to the information carried on the PDCCH. Accordingly, if failing to read the PDCCH, the UE cannot obtain data carried on a subsequent PDSCH. Therefore, performance of the PDCCH is crucial for a cell.

In a wireless heterogeneous network (HetNet, Heterogeneous Network), a scenario that a macro cell (Macro cell) and a pico cell (Pico cell) share a frequency spectrum is taken as an example. Because the pico cell and the macro cell have a great difference in transmission powers, which respectively are 30dBm and 46dBm in general, then the UE in the pico cell will be subject to severe interference from the macro cell when receiving the PDCCH, causing lower PDCCH performance. In addition, the PDCCH performance will even deteriorate when the pico cell introduces a cell range extension (Cell Range Extension) technique. Therefore, a 3rd Generation Partnership Project (3GPP, Third Generation Partnership Project) introduces an enhanced inter-cell interference coordination (eICIC, enhanced Inter-Cell Interference Coordination) mechanism of a time domain (time domain) to solve downlink inter-cell interference with an almost blank subframe (ABS, Almost Blank Subframe) when different types of cells are of hybrid deployment in the HetNet network.

The almost blank subframe means that only common pilots and common messages, such as a primary synchronization signal (PSS, Primary Synchronization Signal)/a secondary synchronization signal (SSS, Secondary Synchronization Signal) etc. are transmitted on the subframe, or control messages and/or downlink data are transmitted in a low power or a low activity mode on the subframe, in addition to common pilots and common messages. Hereinafter, a technical solution that only common pilots and common messages are transmitted on the almost blank subframe is referred to as an ABS zero power solution, and a technical solution that the almost blank subframe has low power or low activity transmission in addition to common pilots and common messages transmission is referred to as an ABS low power solution.

An individual downlink subframe of an aggressive cell (aggressive cell) is configured to be an ABS subframe, so as to reduce interference to downlink transmission, especially to a downlink control channel, of a victim cell (victim cell).

However, in the ABS zero power solution, the aggressive cell does not transmit PDCCH on the ABS subframe. Without the PDCCH, the UE is unable to know the frequency domain resource position of its PDSCH, and therefore, the aggressive cell does not transmit PDSCH on the ABS either. That is to say, the aggressive cell reduces its throughput by sacrificing resources of a subframe level to improve the PDCCH performance of the victim cell, and such can cause a low time-frequency resource utilization of the aggressive cell. For example, when an ABS format is 3/8, the aggressive cell only can utilize the remaining 5/8 of the time-frequency resources.

In the ABS low power solution, the aggressive cell transmits PDCCH on the ABS in a low power, but may still transmit PDSCH with a same transmission power as other subframes. Accordingly, transmitting, by the aggressive cell, the PDCCH in a low power can alleviate the interference to the PDCCH of the victim cell to some extent, however, if the number of the OFDM symbols occupied by the PDCCH of the aggressive cell is relatively small, for example, only OFDM symbol #0 is occupied, PDSCH data will initially be carried from OFDM symbol #1. Taking a maximum number 3 of the OFDM symbols occupied by the PDCCH as an example, then the PDSCH of the aggressive cell on OFDM symbols #1 and #2 will cause strong interference to the PDCCH of the victim cell.

Further, in the ABS low power solution, the victim cell estimates a bearable ABS transmission power value according to an RSRP reported by the UE, which is equivalent to conservatively estimating the ABS transmission power according to a full load situation of the PDCCH of the aggressive cell, and therefore, when the aggressive cell sets a PDCCH transmission power of the ABS according to the value, the value may be directly adopted or be adjusted according to an actual load situation of the PDSCH of the aggressive cell.

Accordingly, in one aspect, if the ABS transmission power is conservatively estimated according to the full load situation of PDCCH, it may cause a Macro Cell to have a too low transmission power on the ABS, that is, the ABS resources cannot be fully utilized.

In another aspect, if the ABS transmission power is adjusted according to the actual load situation of the PDSCH, correlation between the actual PDCCH load and PDSCH load is not strong because of a large difference between different service characteristics. For example, when the PDCCH load is light, the PDSCH load may still be large. On the contrary, a situation that the PDCCH load is heavy and the PDSCH load is light may also appears. Therefore, it is not accurate to estimate the ABS transmission power according to the PDSCH load.

In still another aspect, no matter whether the ABS zero power solution or the ABS low power solution is adopted, a cell reference signal (CRS, Cell Reference Signal) of OFDM symbol #0 still exists. The PDCCH of the victim cell will inevitably suffer strong interference from the CRS on OFDM symbol #0 of the aggressive cell, and this problem originally exists in the PDCCH, and a most serious situation may arise especially when the PDCCH of the victim cell only occupies one OFDM symbol. In a situation of two antenna ports, for example, if positions of a macro CRS and a pico CRS are just offset, two REs in four resource elements (RE, Resource Element) of a minimum unit resource element group (REG, Resource Element Group) carrying the PDCCH will suffer strong interference from the macro CRS.

In a current standard state, the victim cell is unable to identify which neighboring cell has larger interference to its PDCCH according to current interactive information, therefore the victim cell cannot make the aggressive cell to take measures to reduce interference to its own PDCCH. Meanwhile, the PDCCH of the victim cell on OFDM symbol #0 will inevitably suffer strong interference from the CRS of the aggressive cell on OFDM symbol #0. Further, in the ABS zero power solution or the ABS low power solution, although the interference from the aggressive cell to the PDCCH of the victim cell can be reduced to some extent, the two problems described above still exist.

In a current HetNet network, a macro cell is considered as an aggressive cell and a pico cell is considered as a victim cell in a scenario of macro+pico. In a scenario of macro+femto, however, a femto cell is an aggressive cell and a macro cell is a victim cell. That is to say, an aggressive cell and a victim cell are indicated through network planning in the current HetNet network. Then the aggressive cell configures an ABS subframe to reduce interference to downlink transmission, especially to a PDCCH of the victim cell.

The two problems described above still exist because an ABS mechanism is adopted in the solution. In addition, adopting the manner of network planning is time-consuming and laborious, and is unable to adjust dynamically according to a PDCCH interference situation.

In an HII/OI/RNTP mechanism, eNBs exchange a relative narrowband Tx power (RNTP, Relative Narrowband Tx Power) with each other to know a PDSCH transmission power of a neighboring cell and thus avoid strong interference from an PDSCH of the neighboring cell to its PDSCH according to the above information.

However, the RNTP mechanism can only reflect a PDSCH interference situation, but cannot actually reflect a PDCCH interference situation. For example, in a full buffer (full buffer) service, even if only one UE is scheduled, all RB resources will be occupied, namely the PDSCH is in full buffer. At this time, the PDCCH may only occupy one OFDM symbol, namely the PDCCH load is relatively small. In other words, the PDSCH interference situation will not reflect an actual PDCCH interference situation, and therefore, the victim cell cannot identify a neighboring cell having larger interference to its own PDCCH by using the RNTP information.

## SUMMARY

Embodiments of the present invention provide a method and a base station for coordinating physical downlink control channel interference to reduce effect of interference to a PDCCH of a victim cell.

Embodiments of the present invention provide a method for coordinating physical downlink control channel interference, including:

exchanging, by a first base station, with a neighboring cell base station, physical downlink control channel PDCCH state information.

Embodiments of the present invention further provide a first base station, including:

an exchanging unit, configured to exchange, with a neighboring cell base station, physical downlink control channel PDCCH state information.

Embodiments of the present invention provide a method and a base station for coordinating physical downlink control channel interference, where, base stations of neighboring cells exchange PDCCH state information, so that a victim cell can identify an aggressive cell according to the above information, and notify the aggressive cell of taking a measure to reduce effect of interference to a PDCCH of the victim cell. Thereby the aggressive cell takes the measure to achieve PDCCH interference coordination, and to reduce the effect of the interference from the aggressive cell to the PDCCH of the victim cell.

Embodiments of the present invention further provide a method for coordinating physical downlink control channel interference, includes:

exchanging, by a second base station, with a neighboring cell base station, a physical downlink control channel PDCCH performance information.

Embodiments of the present invention provide a method for coordinating physical downlink control channel interference, where, base stations of neighboring cells exchange PDCCH performance information, so that an aggressive cell actively find that it is a strong interference source to a PDCCH of a certain victim cell, and then actively take a measure to reduce effect of interference to the PDCCH of the victim cell.

**BRIEF DESCRIPTION OF DRAWINGS**

In order to illustrate technical solutions of embodiments of the present invention or in the prior art more clearly, accompanying drawings needed for describing the embodiments or the prior art will be introduced in brief hereinafter. Apparently, the accompanying drawings show some embodiments of the invention, and persons skilled in the art can derive other drawings from the accompanying drawings without creative efforts.

FIG. 1 is a flow chart of a method for coordinating physical downlink control channel interference according to an embodiment of the present invention;

FIG. 2 is a schematic diagram of remaining $N_{Max}$-N OFDM symbols emptied by an aggressive cell base station in a method for coordinating physical downlink control channel interference according to an embodiment of the present invention;

FIG. 3 is a flow chart of a method for coordinating physical downlink control channel interference according to another embodiment of the present invention;

FIG. 4 is a flow chart of a method for coordinating physical downlink control channel interference according to Embodiment 4 of the present invention;

FIG. 5 is a schematic structural diagram of a first base station according to an embodiment of the present invention;

FIG. 6 is a schematic structural diagram of a second base station according to an embodiment of the present invention;

FIG. 7 is a schematic structural diagram of a wireless communication system according to an embodiment of the present invention;

FIG. 8 is a schematic structural diagram of another second base station according to an embodiment of the present invention;

FIG. 9 is a schematic structural diagram of another first base station according to an embodiment of the present invention; and

FIG. 10 is a schematic structural diagram of another wireless communication system according to an embodiment of the present invention.

**DESCRIPTION OF EMBODIMENTS**

In order to make the objects, technical solutions, and advantages of the embodiments of the present invention clearer, the technical solutions in the embodiments of the present invention are hereinafter described clearly and completely with reference to the accompanying drawings in the embodiments of the present invention. Obviously, the embodiments described here are part of the embodiments of the present invention and not all of the embodiments. All other embodiments obtained by persons skilled in the art on the basis of the embodiments of the present invention without any creative efforts all fall within the protection scope of the present invention.

Embodiments of the present invention are applicable to a situation that an aggressive cell and a victim cell have been synchronized in OFDM symbol level, and achieve coordination of interference from the aggressive cell to a PDCCH of the victim cell.

A method for coordinating physical downlink control channel interference provided by an embodiment of the present invention includes: a first base station exchanges, with a neighboring cell base station, PDCCH state information for controlling PDCCH interference coordination. Where, the PDCCH state information includes the number of CCEs (Control Channel Element, control channel element) averagely occupied by a control channel in a period of time, PDCCH transmission power, and the like. The control channel in each subframe includes a PDCCH for multiple UEs, and the PDCCH for each UE includes 1/2/4/8 CCEs, and therefore, the number of CCEs occupied by the control channel can reflect a PDCCH load condition; the PDCCH transmission power can be indicated, similar to a PDSCH solution, with an offset relative to CRS transmission power.

The neighboring cell base station is a base station of a cell adjacent to the first base station. The interference is coordinated with respect to different cells, but a coordination entity is a base station where a cell is located. Generally, a macro base station includes three cells (cell). If Cell cell_1 of Base Station A and Cell cell_3 of Base Station B are mutual neighboring cells, and Cell cell_1 of Base Station A causes large interference to Cell cell_3 of Base Station B, interference coordination is required between Base Station A and Base Station B. And the two base stations are mutual neighboring cell base stations.

For example, eNBs exchanges PDCCH state information of cells through X2/S1. When the first base station is a victim cell base station, the first base station can find an aggressive cell base station from the neighboring cell base station according to the state information, so as to control interference coordination to a PDCCH.

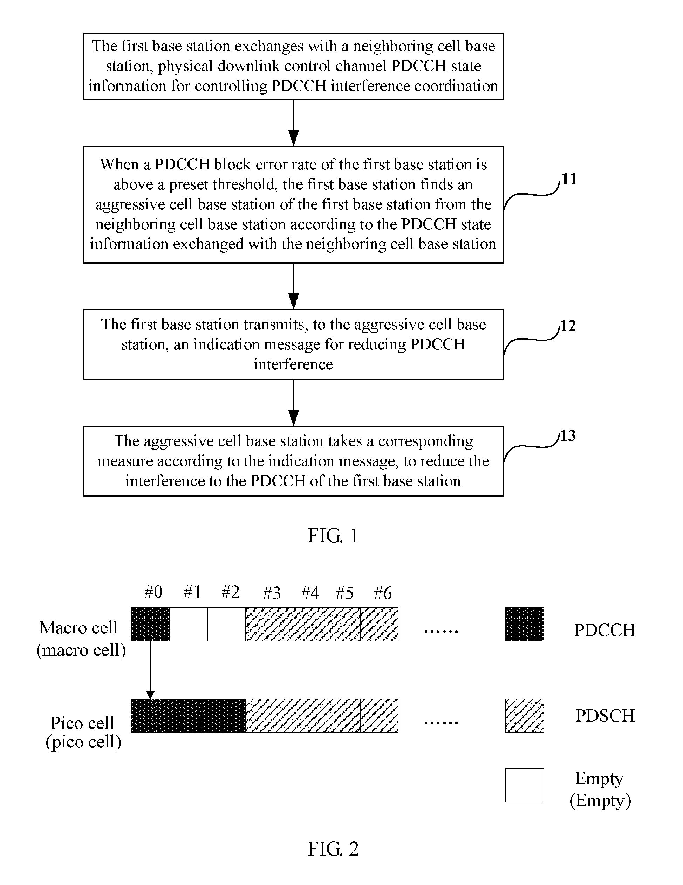

As shown in FIG. 1, the method for coordinating physical downlink control channel interference provided in the embodiment of the present invention, on the basis of the above embodiment, can further include:

Step 11, when a PDCCH block error rate of the first base station is above a preset threshold, the first base station finds an aggressive cell base station of the first base station from the neighboring cell base station according to the PDCCH state information exchanged with the neighboring cell base station.

Where, the PDCCH block error rate (BLER, Block Error Rate) can be calculated with the following formula:

$$\mathrm{BLER_{PDCCH}} = (\ N_{none} + N1)/(\ N_{ACK} + N_{NACK} + N_{none} + N1 + N2) \qquad (1)$$

For example, in an LTE wireless communication system, a UE may feed back an ACK when successfully receiving a PDSCH, feed back a NACK when successfully receiving a PDCCH but failing to receive the PDSCH, and feed back no information when failing to receive the PDCCH or not finding any PDCCH transmitted to the UE.

If the base station, such as an eNB, transmits control information relevant to the PDSCH to a certain UE on the PDCCH, but the UE does not feed back any information, then it can be considered that the UE fails to receive the PDCCH. If the base station, such as an eNB, transmits control information relevant to the PUSCH to a certain UE on the PDCCH, and the UE finally does not transmit any uplink data on a corresponding time-frequency resource, then it can be considered that the UE fails to receive the PDCCH. As for the control information relevant to the PDSCH, the base station counts the times of feeding back ACK or NACK by a UE, and the times of not feeding back any information, during a period of time to calculate a PDCCH block error rate of a cell. As for the information relevant to the PUSCH, the base station counts the times of transmitting uplink data by a specific UE on a corresponding time-frequency resource and the times of not transmitting any uplink data by the specific UE on the corresponding time-frequency resource to calculate the PDCCH block error rate of the cell.

The base station makes statistics on the above five situations, the counted times of the ACKs is marked as $N_{ACK}$, and the counted times of the NACK is marked as $N_{NACK}$, and meanwhile the times of the UE not feeding back any information when the base station transmits control information relevant to the PDSCH to a certain UE on the PDCCH is marked as Nnone. Meanwhile, the counted times of not receiving any uplink data from the specific user equipment on a relevant time-frequency resource is marked as N1, and the counted times of the base station receiving uplink data from the specific user equipment on the relevant time-frequency resource is marked as N2. BLERPDCCH is the PDCCH block error rate of the base station.

When the PDCCH block error rate of the first base station is above a preset threshold, it indicates that the first base station has poor PDCCH performance, has suffered interference from a neighboring cell base station and becomes a victim cell base station.

The first base station analyzes PDCCH state information of the neighboring cell base station, for example, when the number of CCEs averagely occupied by a neighboring cell base station is relatively large, or the number of CCEs averagely occupied is relatively large and PDCCH transmission power is relatively large, the first base station determines that the neighboring cell base station causes overlarge PDCCH interference to a local cell, and the neighboring cell base station is an aggressive cell base station of the first base station.

Step 12, the first base station transmits, to the aggressive cell base station, an indication message for reducing PDCCH interference.

For example, the first base station transmits an explicit indication message, such as a binary variable 1, to the aggressive cell base station through X2/S1, to notify the aggressive cell base station identified by the victim cell base station of taking a certain measure to reduce the interference to the PDCCH of the local cell.

Step 13, the aggressive cell base station takes a corresponding measure according to the indication message, to reduce the interference to the PDCCH of the first base station.

For example, the aggressive cell base station increases the number of OFDM symbols occupied by the PDCCH of the aggressive cell base station according to the indication message, so as to reduce the interference to the PDCCH of the first base station. In other words, the aggressive cell base station extends the number of the OFDM symbols occupied by its own PDCCH to $N_{Max}$ OFDM symbols, namely, disperses PDCCH interference to $N_{Max}$ OFDM symbols to reduce a probability of collisions between REs occupied by a PDCCH of the aggressive cell base station and REs occupied by a PDCCH of the victim cell base station, and thereby the interference from the aggressive cell to the PDCCH of the victim cell can be reduced.

Or, the aggressive cell base station empties a part of OFDM symbols according to the indication message, and the part of OFDM symbols include OFDM symbols from an OFDM symbol numbered by the number of the OFDM symbols occupied by the PDCCH of the aggressive cell base station to an OFDM symbol numbered by a maximum number of the OFDM symbols that the PDCCH of the aggressive cell base station can occupy. For example, if the number of OFDM symbols actually occupied by the PDCCH of the aggressive cell base station is N, and $N<N_{Max}$ is satisfied, the aggressive cell base station will empty $N_{Max}$-N OFDM symbols, namely a PDSCH is not carried on the $N_{Max}$-N OFDM symbols. As shown in FIG. 2, when N=1 and $N_{Max}$=3, PDCCH of a base station of a macro cell, namely the aggressive cell base station, only occupies OFDM symbol #0, and the aggressive cell base station will empty the remaining OFDM symbols #1 and #2, so that a PDCCH of a pico cell, namely the victim cell, is not affected by the aggressive cell base station on OFDM symbols #1 and #2, and thereby the interference to the PDCCH of the victim cell is reduced.

When the aggressive cell base station takes the measure of emptying a part of OFDM symbols, the method for coordinating physical downlink control channel interference provided in the embodiment of the present invention can further include: the aggressive cell base station notifies a user equipment (UE) of a starting OFDM symbol of a PDSCH transmitted to the UE, so that the UE can know an accurate starting position of the PDSCH.

In the above embodiment, before the first base station transmits, to the aggressive cell base station, the indication message for reducing PDCCH interference, the method can further include:

the first base station increases the number of OFDM symbols occupied by the PDCCH of the first base station. Specifically, when the PDCCH BLER is above a certain threshold, the base station determines that PDCCH performance of a local cell is too poor and the local cell is a victim cell. Then the base station firstly extends OFDM symbols occupied by its own PDCCH to $N_{Max}$ OFDM symbols, where $N_{Max}$ is a maximum threshold of OFDM symbols that can be occupied by the PDCCH, that is, the PDCCH can maximally occupies $N_{Max}$ OFDM symbols. For example, when OFDM symbols occupied by the PDCCH of the base station are 1~3 or 2~4, $N_{Max}$=3 or 4. Accordingly, the victim cell, through extending OFDM symbols occupied by its own PDCCH to $N_{Max}$ OFDM symbols, reduces the effect of interference from a CRS on OFDM symbol #0 of the aggressive cell to the PDCCH of the victim cell, and thereby PDCCH performance of the victim cell can be further improved.

When the first base station increases the number of the OFDM symbols occupied by the PDCCH of the first base station before transmitting, to the aggressive cell base station, the indication message for reducing PDCCH interference, the method for coordinating physical downlink control channel interference provided in the embodiment of the present invention can further include: when the PDCCH block error rate falls below the preset threshold, the first base station reduces the number of the OFDM symbols occupied by the PDCCH of the first base station. For example, before the PDCCH block error rate falls below the preset threshold, the PDCCH of the first base station has been occupied $N_{Max}$ OFDM symbols; when the PDCCH block error rate falls below the preset threshold, return to the number of OFDM symbols that is occupied by the PDCCH and determined according to an actual load of the PDCCH, or reduce the number of OFDM symbols occupied by the PDCCH, so as to improve cell throughput, and achieve a purpose of fully utilizing time-frequency resources.

Further, the method for coordinating physical downlink control channel interference provided in the embodiment of the present invention, after the first base station reduces the number of the OFDM symbols occupied by the PDCCH of the first base station, can further include:

The first base station transmits an indication message for canceling the measure to the aggressive cell base station, for example, the first base station transmits an explicit indication message (such as a binary variable 0), to the aggressive cell base station through X2/S1, to notify the aggressive cell base station of returning to a state existing before the above measure is taken;

The aggressive cell base station reduces the number of the OFDM symbols occupied by the PDCCH of the aggressive cell base station according to the indication message. For example, when the indication message is received, the aggressive cell base station can, according to a PDSCH scheduling situation, dynamically adjust the number of the OFDM symbols occupied by the PDCCH, and reduce the number of the OFDM symbols occupied by the PDCCH of the aggressive cell base station, such as when the PDCCH only occupies OFDM symbol #0, OFDM symbols #1 and #2 can be fully utilized to transmit a PDSCH, so as to improve cell throughput, and achieve a purpose of fully utilizing time-frequency resources.

Another method for coordinating physical downlink control channel interference provided by an embodiment of the present invention includes: a second base station exchanges, with a neighboring cell base station, PDCCH performance information for controlling PDCCH interference coordination. For example, eNBs exchange their PDCCH performance information, such as, PDCCH block error rate, through X2/S1. Accordingly, the second base station can know a victim cell base station in the neighboring cell base station according to the exchanged PDCCH performance information. For example, when the second base station finds a PDCCH block error rate of a certain neighboring cell base station is relatively large, and the number of CCEs averagely occupied by the second base station is relatively large and PDCCH transmission power is relatively large, the second base station determines that the neighboring cell base station is a victim cell base station. Then, the second base station can further take a measure to reduce effect of interference to a PDCCH of the victim cell.

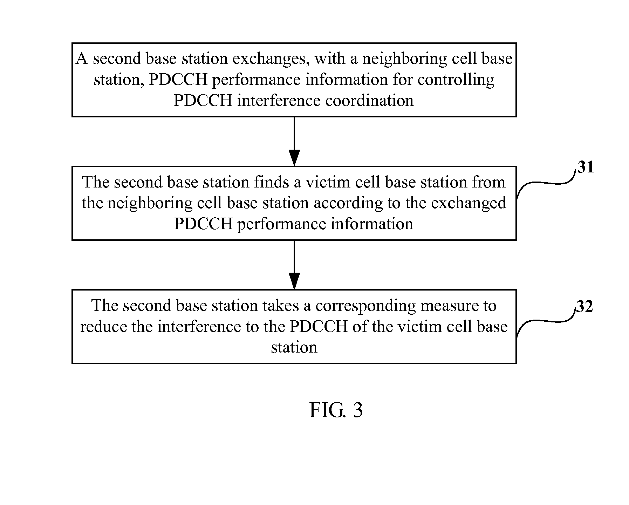

As shown in FIG. 3, a method for coordinating physical downlink control channel interference provided in the embodiment of the present invention, on the basis of the method for coordinating physical downlink control channel interference described above, can further include:

Step 31, the second base station finds a victim cell base station from the neighboring cell base station according to the exchanged PDCCH performance information.

For example, when finding a PDCCH block error rate of a certain neighboring cell base station is above a preset threshold, the second base station determines that the neighboring cell base station is a victim cell base station, and when finding that the number of CCEs averagely occupied by the second base station is relatively large and the PDCCH transmission power is relatively large, the second base station determines that the second base station is a aggressive cell base station of the neighboring cell base station.

Step 32, the second base station takes a corresponding measure to reduce the interference to the PDCCH of the victim cell base station.

For example, the second base station increases the number of the OFDM symbols occupied by the PDCCH of the second base station. See operational illustration of the aggressive cell base station in the embodiment shown in FIG. 1 for details.

Or, for example, the second base station empties a part of OFDM symbols, and the part of OFDM symbols include OFDM symbols from an OFDM symbol numbered by the number of the OFDM symbols occupied by the PDCCH of the second base station to an OFDM symbol numbered by a maximum number of the OFDM symbols that the PDCCH of the second base station can occupy. See operational illustration of the aggressive cell base station in the embodiment shown in FIG. 1 for details.

When the second base station takes the measure of emptying a part of OFDM symbols, the method for coordinating physical downlink control channel interference provided in the embodiment of the present invention can further include: the second base station notifies a UE of a starting OFDM symbol of a PDSCH transmitted to the UE, so that the UE can know an accurate starting position of the PDSCH.

The method for coordinating physical downlink control channel interference provided in the embodiment of the present invention can further include: when knowing that the PDCCH block error rate of the victim cell base station falls below a preset threshold, the second base station reduces the number of the OFDM symbols occupied by the PDCCH of the second base station, so as to improve cell throughput, and achieve a purpose of fully utilizing time-frequency resources. See operational illustration of the aggressive cell base station in the embodiment shown in FIG. 1 for details.

The method for coordinating physical downlink control channel interference provided in the embodiment of the present invention can further include: when a PDCCH block error rate of the victim cell base station is above a preset threshold, the victim cell base station increases the number of the OFDM symbols occupied by the PDCCH of the victim cell base station, so as to further reduce effect of PDCCH interference of the second base station.

The method for coordinating physical downlink control channel interference will be described in details with reference to Embodiment 1 to Embodiment 7.

Embodiment 1

In this embodiment, a certain base station exchanges, in real time, regularly or periodically, PDCCH state information with a neighboring cell base station, and the base station judges, in real time, regularly or periodically, whether its own PDCCH block error rate exceeds a preset threshold. When the base station finds its own PDCCH block error rate is too high, i.e., exceeds the preset threshold, the base station is a victim cell base station, and the base station firstly increases OFDM symbols occupied by its own PDCCH.

Subsequently, if the base station finds its own PDCCH block error rate falls to an acceptable range, such as below the preset threshold, no further actions will be taken; if the PDCCH block error rate is still unacceptable, such as above the preset threshold, the base station finds an aggressive cell base station through analyzing state information of a neighboring cell and transmits an explicit indication message to the aggressive cell, to make the aggressive cell base station take a measure to reduce interference to a PDCCH of the base station. For example, the aggressive cell is required to increase the number of OFDM symbols occupied by a PDCCH, or the aggressive cell is required to empty a part of OFDM symbols, or the aggressive cell is explicitly instructed with the indication message to fixedly use several OFDM symbols for a PDCCH of the aggressive cell.

When receiving the indication message, the aggressive cell base station empties a part of OFDM symbols, or increases the number of OFDM symbols occupied by its own PDCCH, or fixedly uses several OFDM symbols according to the indication message from the victim cell, so as to reduce the interference to the PDCCH of the base station.

Embodiment 2

This embodiment is substantially the same with Embodiment 1, except that: if finding its own PDCCH block error rate is too high, the certain base station does not increase the number of OFDM symbols occupied by its own PDCCH, but directly finds an aggressive cell base station according to the PDCCH state information exchanged with the neighboring cell base station, and transmits an explicit indication message to the aggressive cell base station, to make the aggressive cell base station take a measure to reduce the interference to the PDCCH of the base station.

Optionally, when subsequently finding its own PDCCH block error rate is acceptable, the victim cell base station transmits an explicit indication message to the aggressive cell base station, that is, instruct the aggressive cell base station to dynamically adjust the number of the OFDM symbols occupied by the PDCCH according to actual PDSCH scheduling, or explicitly instructs, with the indication message, the aggressive cell to fixedly use several OFDM symbols for the PDCCH of the aggressive cell.

Embodiment 3

In this embodiment, a certain base station exchanges, in real time, regularly or periodically, PDCCH performance information with a neighboring cell base station.

If the base station, by analyzing the PDCCH performance information of the neighboring cell base station, finds that a PDCCH block error rate of a certain neighboring cell base station is too high, such as above a preset threshold, and the number of CCEs occupied by its own PDCCH is relatively large or PDCCH transmission power is relatively large, the neighboring cell base station is considered to be a victim cell base station, and the base station is considered to be an aggressive cell base station of the neighboring cell base station. Then the base station increases the number of OFDM symbols occupied by its own PDCCH, or empties a part of OFDM symbols, so as to reduce interference to a PDCCH of the victim cell base station.

Embodiment 4

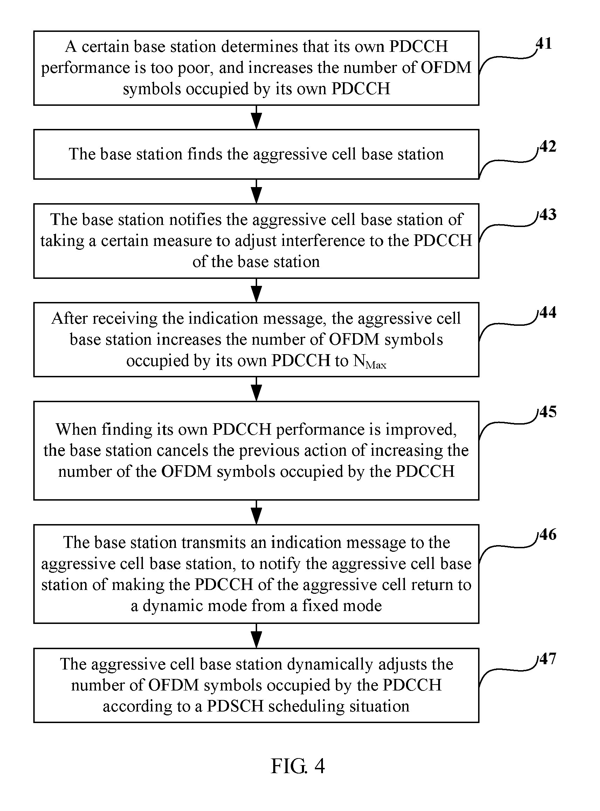

As shown in FIG. 4, the method specifically includes:

Step 41, a certain base station determines that its own PDCCH performance is too poor, and increases and extends the number of OFDM symbols occupied by its own PDCCH.

For example, the base station calculates its own PDCCH block error rate by using the above formula (2) after obtaining $N_{ACK}$, $N_{NACK}$, Nnone, N1 and N2through statistics.

When the PDCCH block error rate is above a preset threshold, the base station determines that PDCCH performance of its own cell is too poor.

After finding its own PDCCH performance is too poor, the base station increases the number of OFDM symbols occupied by its own PDCCH to $N_{Max}$. For example, when OFDM symbols occupied by the PDCCH of the base station are 1-3 or 2~4, $N_{Max}$=3 or 4, the base station increases the number of OFDM symbols occupied by its own PDCCH to 3 or 4 to reduce interference from CRS on OFDM symbol #0 of the aggressive cell base station to a victim cell, i.e., to the PDCCH of the base station, and the PDCCH performance of the base station is improved.

Step 42, the base station finds a neighboring cell base station, which causes relatively large interference to the PDCCH of the base station, i.e., finds the aggressive cell base station.

For example, the base station knows PDCCH occupying state of its neighboring cell base station according to cell PDCCH state information exchanged with its neighboring cell base station through X2/S1, so as to find a neighboring cell base station causing relatively large interference to the base station.

When the base station determines its own PDCCH performance is too poor in step 41, the base station will analyze the PDCCH state information of the neighboring cell base station. For example, when the number of CCEs averagely occupied by a neighboring cell base station is relatively large, or the number of the CCEs averagely occupied is relatively large and PDCCH transmission power is relatively large, the base station determines that the neighboring cell causes overlarge interference to a PDCCH of a local cell, and thereby judges the neighboring cell base station is an aggressive cell base station.

Step 43, the base station notifies the aggressive cell base station of taking a certain measure to adjust interference to the PDCCH of the base station.

During a period of time after the victim cell base station, i.e., the base station increases the number of OFDM symbols occupied by its own PDCCH to $N_{Max}$, the PDCCH performance of the base station is not improved, then the base station transmits an explicit indication message (such as a binary variable 1), through X2/S1, to the aggressive cell base station found in step 42 to notify the aggressive cell base station of taking a certain measure to reduce the interference to the PDCCH of the local cell.

Step 44, after receiving the indication message, the aggressive cell base station increases the number of OFDM symbols occupied by its own PDCCH to $N_{Max}$, so as to disperse PDCCH interference to $N_{Max}$ OFDM symbols, and reduce the interference to the PDCCH of the victim cell base station, i.e., the base station.

Step 45, subsequently, when finding its own PDCCH performance is improved, the base station cancels the previous action of increasing the number of the OFDM symbols occupied by the PDCCH. For example, the base station reduces the number of the OFDM symbols occupied by its own PDCCH, or dynamically adjusts the number of OFDM symbols occupied by the PDCCH according to an actual PDCCH load, so as to improve cell throughput.

Step 46, subsequently, if, for a period of time, the PDCCH performance of the base station has no significant degradation, the base station transmits an explicit indication message (such as a binary variable 0), to the aggressive cell base station through X2/S1, to notify the aggressive cell base station of canceling the action of reducing the interference to the PDCCH of the local cell. Specifically, when the base station subsequently finds its own PDCCH block error rate falls to an acceptable range, such as below the preset threshold, the base station transmits an explicit indication message to the aggressive cell base station to make the aggressive cell base station return to an operation before taking the measure from an operation after taking the measure, that is, instruct the aggressive cell base station to dynamically adjust the number of OFDM symbols occupied by the PDCCH according to actual PDSCH scheduling, or explicitly instructs, with the indication message, the aggressive cell fixedly use several OFDM symbols for the PDCCH of the aggressive cell.

Step 47, when the aggressive cell base station receives the indication message, the aggressive cell base station dynamically adjusts the number of OFDM symbols occupied by the PDCCH according to a PDSCH scheduling situation, compared with a PDCCH fixed mode adopted by the victim cell and the aggressive cell, a PDCCH dynamic mode can fully utilize OFDM symbols #1 and #2 to transmit PDSCH in a case that the PDCCH occupies a relatively small number of the OFDM symbols, such as only occupies OFDM symbol #0, so as to improve cell throughput, achieve a purpose of fully utilizing time-frequency resources, and improve resource utilization of the PDSCH.

Embodiment 5

This embodiment is substantially the same with Embodiment 4, except that: the aggressive cell base station still dynamically adjusts the number of OFDM symbols occupied by the PDCCH according to the PDSCH scheduling situation, after receiving the explicit indication message (such as a binary variable 1), from the victim cell base station.

In accordance with a current LTE protocol, if the PDCCH occupies N OFDM symbols, the PDSCH will start from OFDM symbol #N. In this embodiment, however, $N_{Max}$-N OFDM symbols are emptied, namely do not carry PDSCH data thereon, so as to reduce the interference to the PDCCH of the victim cell.

Correspondingly, an additional physical layer signaling is required in this embodiment, so that the aggressive cell base station can notify the UE that the PDSCH will start from which OFDM symbol, because at this time the UE cannot know an accurate starting position of the PDSCH according to N value indicated by a PCFICH.

Embodiment 6

This embodiment is the same with Embodiment 4 in Step 41, that is, the victim cell base station increases the number of OFDM symbols occupied by its own PDCCH after determining that its own PDCCH performance is too poor, and the difference is that, in this embodiment, after Step 41 is accomplished, the aggressive cell base station performs self-discovery and actively takes a measure to adjust the interference to the PDCCH of the victim cell base station, namely the base station in Step 41.

Specifically, the victim cell base station and the neighboring cell base station exchange their PDCCH performance information through X2/S1, when a certain neighboring cell base station finds a PDCCH block error rate of the base station (namely the victim cell base station) is relatively large, and the number of CCEs averagely occupied by the neighboring cell base station is relatively large and PDCCH transmission power is relatively large, then determines itself, namely the neighboring cell base station, is an aggressive cell base station to the victim cell base station.

Subsequently, the neighboring cell base station actively takes a measure to reduce the interference to the victim PDCCH, such as, increases the number of OFDM symbols occupied by the PDCCH to $N_{Max}$, so as to disperse PDCCH interference to $N_{Max}$ OFDM symbols, and reduce the interference to the PDCCH of the victim cell.

Subsequently, when finding the PDCCH block error rate of the base station in Step 41 is relatively small, the neighboring cell base station can return to determining the number of OFDM symbols occupied by the PDCCH according to actual PDSCH load, and use subsequent OFDM symbols to transmit a PDSCH, so as to improve resource utilization of the PDSCH.

Embodiment 7

This embodiment differs from Embodiment 6 in that, after performing self-discovery, the aggressive cell base station takes an adjustment measure in Embodiment 5 of emptying a part of OFDM symbols. And refer to description of Embodiment 5 for details.

Persons skilled in the art may understand that all or a part of the steps in the method embodiments may be implemented by a program instructing relevant hardware. The program may be stored in a computer readable storage medium, when the program is run, the steps in the above method embodiments are performed; the aforementioned storage medium includes various medium capable of storing program codes, such as a ROM, a RAM, a magnetic disk, an optical disk, or the like.

The first base station provided in an embodiment of the present invention is configured to implement the method in the embodiment illustrated in FIG. 1, including: an exchanging unit, configured to exchange with a neighboring cell base station, physical downlink control channel PDCCH state information for controlling PDCCH interference coordination. In addition, the first base station provided in the embodiment of the present invention further includes general functional units of a base station, such as a mobile signal transceiving unit, a radio frequency processing unit and a baseband processing unit, and the details will not be described herein again because they do not belong to the improvements of the present invention.

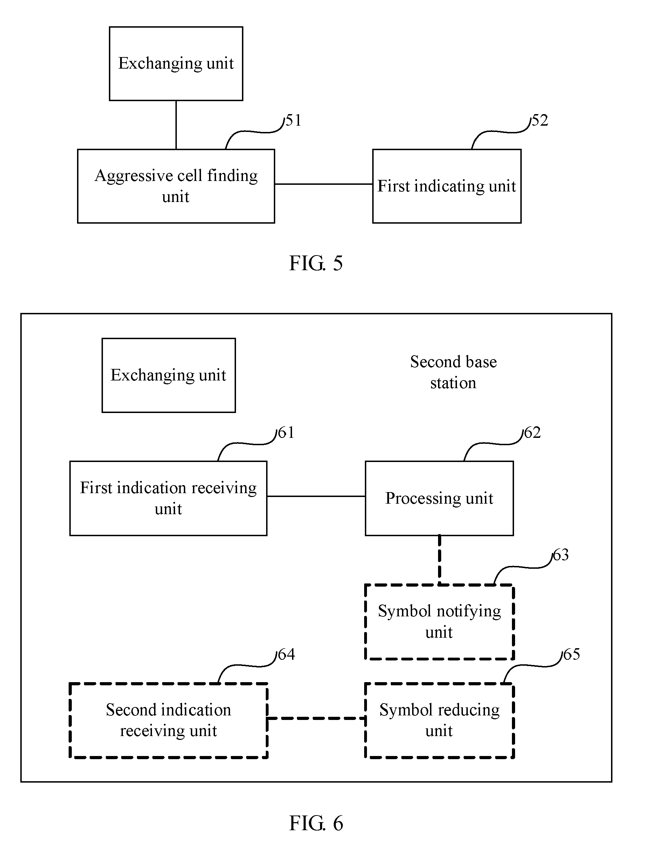

FIG. 5 is a schematic structural diagram of a first base station according to an embodiment of the present invention, the first base station is used to implement the method in the embodiment illustrated in FIG. 1, the first base station in this embodiment, on the basis of the structure of the first base station aforementioned, further includes: an aggressive cell finding unit 51 and a first indicating unit 52.

The aggressive cell finding unit 51 is configured to, when a PDCCH block error rate of the first base station is above a preset threshold, find an aggressive cell base station of the first base station from the neighboring cell base station according to the PDCCH state information exchanged with the neighboring cell base station; refer to description of the foregoing method embodiments shown in FIG. 1 for details.

The first indicating unit 52 is configured to transmit, to the aggressive cell base station, an indication message for reducing PDCCH interference, so that the aggressive cell base station takes a corresponding measure according to the indication message to reduce interference to a PDCCH of the first base station. Refer to description of the foregoing method embodiments shown in FIG. 1 for details.

The first base station provided in the embodiment of the present invention can further include: a symbol increasing unit, configured to increase the number of OFDM symbols occupied by the PDCCH of the first base station, before the first indicating unit 52 transmits, to the aggressive cell base station, the indication message for reducing PDCCH interference. For example, when OFDM symbols occupied by the PDCCH of the first base station are 1-3 or 2~4, $N_{Max}$=3 or 4. Accordingly, the symbol increasing unit 53 increases the OFDM symbols occupied by the PDCCH of the first base station to $N_{Max}$ OFDM symbols to reduce effect of interference from CRS on OFDM symbol #0 of the aggressive cell to the PDCCH of the first base station, thereby the PDCCH performance of the first base station can be further improved. Refer to description of the foregoing method embodiments shown in FIG. 1 for details.

The first base station provided in the embodiment of the present invention can further include: a symbol reducing unit, configured to reduce the number of the OFDM symbols occupied by the PDCCH of the first base station when the PDCCH block error rate falls below the preset threshold, so as to improve cell throughput of the first base station, and achieve a purpose of fully utilizing time-frequency resources.

The first base station provided in the embodiment of the present invention can further include: a second indicating unit, configured to, after the symbol reducing unit reduces the number of the OFDM symbols occupied by the PDCCH of the first base station, transmit to the aggressive cell base station, an indication message for canceling the measure, so that the aggressive cell base station reduces the number of the OFDM symbols occupied by the PDCCH of the aggressive cell base station according to the indication message, so as to improve a time-frequency resource utilization of the aggressive cell base station.

Correspondingly, a second base station provided in an embodiment of the present invention, namely the neighboring cell base station of the first base station, includes: an exchanging unit, configured to exchange with a first base station of a neighboring cell, physical downlink control channel PDCCH state information for controlling PDCCH interference coordination. Similar to the first base station, in addition, the second base station provided in the embodiment of the present invention further includes general functional units of a base station, such as a mobile signal transceiving unit, a radio frequency processing unit and a baseband processing unit, and the details will not be described herein again because they do not belong to the improvements of the present invention.

FIG. 6 is a schematic structural diagram of a second base station according to an embodiment of the present invention, which is used to implement the method in the embodiment illustrated in FIG. 1, the second base station in this embodiment, on the basis of the structure of the second base station aforementioned, further includes: a first indication receiving unit 61 and a processing unit 62.

The first indication receiving unit 61 is configured to receive an indication message for reducing PDCCH interference transmitted by the first base station; refer to description of the foregoing method embodiments for details.

The processing unit 62 is configured to take a corresponding measure according to the indication message to reduce interference to a PDCCH of the first base station. For example, the processing unit 62 can specifically be configured to increases the number of OFDM symbols occupied by a PDCCH of the second base station according to the indication message, so as to reduce PDCCH interference to the first base station. Or, the processing unit 62 can specifically be configured to empty a part of OFDM symbols according to the indication message, and the part of OFDM symbols include OFDM symbols from an OFDM symbol numbered by the number of the OFDM symbols occupied by the PDCCH of the aggressive cell base station to an OFDM symbol numbered by a maximum number of the OFDM symbols that the PDCCH of the aggressive cell base station can occupy. Refer to description of the foregoing method embodiments for details.

The second base station provided in the embodiment of the present invention can further include: a symbol notifying unit 63, configured to notify a UE of a starting OFDM symbol of a physical downlink shared channel PDSCH transmitted to the UE, so that the UE can know an accurate starting position of the PDSCH.

The second base station provided in the embodiment of the present invention can further include: a second indication receiving unit 64 and a symbol reducing unit 65. The second indication receiving unit 64 is configured to receive an indication message for canceling the measure transmitted by the first base station; and the symbol reducing unit 65 is configured to reduce the number of OFDM symbols occupied by the PDCCH of the second base station according to the indication message, so as to improve cell throughput of the second base station, and achieve a purpose of fully utilizing time-frequency resources. Refer to description of the foregoing method embodiments for details.

A user equipment for coordinating physical downlink control channel interference provided in an embodiment of the present invention includes: a notification receiving unit, configured to receive a starting OFDM symbol, which is notified by the second base station and of a physical downlink shared channel PDSCH transmitted to the user equipment. In addition, the user equipment provided in the embodiment of the present invention further includes general basic functional units of a UE, such as a mobile signal transceiving unit, and information display, and the details will not be described herein again because they do not belong to the improvements of the present invention.

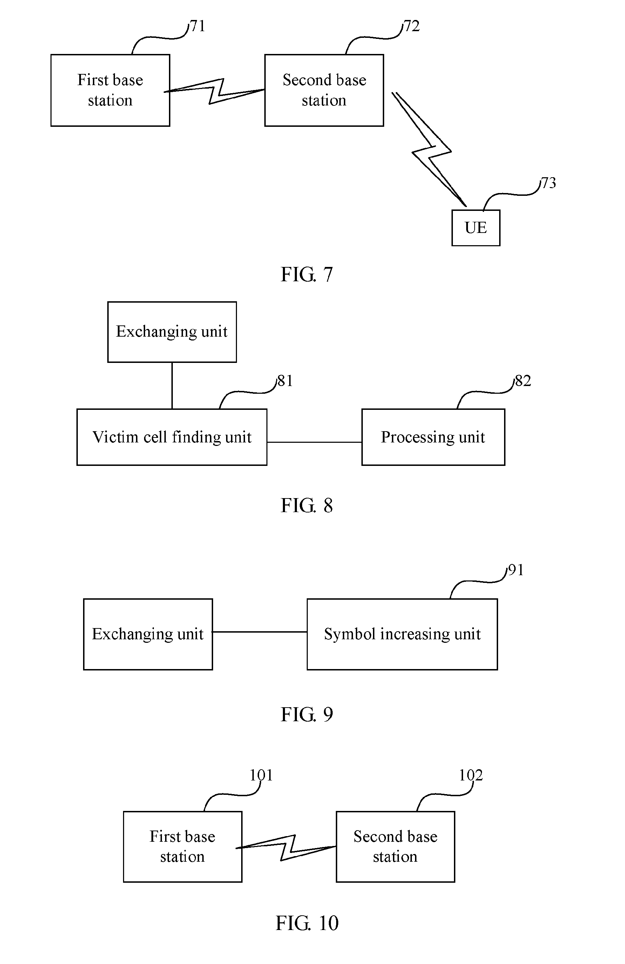

FIG. 7 is a schematic structural diagram of a wireless communication system according to an embodiment of the present invention, the wireless communication system includes a first base station 71, a second base station 72 and a UE 73, where the first base station 71 and the second base station 72 are mutual neighboring cell base station, and PDCCH state information exchanged by the first base station 71 and the second base station 72 is used for controlling PDCCH interference coordination. The UE 73 is one service object of the second base station 72, and the UE and the second base station 72 are in wireless communication connection. The first base station 71 can be any first base station provided in the above embodiments, and the second base station 72 can be any second base station provided in the above embodiments.

An embodiment of the present invention further provide another second base station, another first base station and another wireless communication system, which are used to implement another method for coordinating physical downlink control channel interference and the method in the embodiment illustrated in FIG. 3. The second base station and the first base station will be described as examples hereinafter.

The second base station provided in the embodiment of the present invention includes: an exchanging unit, configured to exchange with a neighboring cell base station, physical downlink control channel PDCCH performance information for controlling PDCCH interference coordination. In addition, the second base station provided in the embodiment of the present invention further includes general functional units of a base station, such as a mobile signal transceiving unit, a radio frequency processing unit and a baseband processing unit, and the details will not be described herein again because they do not belong to the improvements of the present invention.

FIG. 8 is a schematic structural diagram of another second base station according to an embodiment of the present invention. The second base station in this embodiment, on the basis of the structure of the foregoing second base station, further includes: a victim cell finding unit 81 and a processing unit 28.

The victim cell finding unit 81 is configured to find a victim cell base station from the neighboring cell base station according to the exchanged PDCCH performance information; refer to description of the embodiment shown in FIG. 3 for details.

The processing unit 82 is configured to take a corresponding measure to reduce interference to a PDCCH of the victim cell base station.

For example, the processing unit 82 can specifically be configured to increase the number of OFDM symbols occupied by a PDCCH of the second base station. For example, PDCCH interference is dispersed to $N_{Max}$ OFDM symbols, so that a probability of collisions between REs occupied by a PDCCH of the aggressive cell base station and REs occupied by a PDCCH of the victim cell base station can be reduced, and interference from the aggressive cell to the PDCCH of the victim cell can be reduced. Refer to description of the foregoing method embodiments for details.

Or, the processing unit 82 can specifically be configured to empty a part of OFDM symbols, and the part of OFDM symbols include OFDM symbols from an OFDM symbol numbered by the number of the OFDM symbols occupied by the PDCCH of the second base station to an OFDM symbol numbered by a maximum number of the OFDM symbols that the PDCCH of the second base station can occupy. So that the PDCCH of the victim cell will not be affected by the second base station on the emptied part of OFDM symbols, and interference to the PDCCH of the victim cell will be reduced. Refer to description of the foregoing method embodiments for details.

The second base station provided in the embodiment of the present invention can further include: a symbol reducing unit, configured to reduce the number of the OFDM symbols occupied by the PDCCH of the second base station, when knowing that a PDCCH block error rate of the victim cell base station falls below a preset threshold, so as to reduce effect of the interference to the PDCCH of the victim cell, and meanwhile to improve cell throughput of the second base station and achieve a purpose of fully utilizing time-frequency resources. Refer to description of the foregoing method embodiments for details.

The second base station provided in the embodiment of the present invention can further include: a symbol notifying unit, configured to notify a user equipment of a starting OFDM symbol of a PDSCH transmitted to the user equipment, so that the UE can know an accurate starting position of the PDSCH. Refer to description of the foregoing method embodiments for details.

The first base station provided in the embodiment of the present invention includes: an exchanging unit, configured to exchange with a second base station of a neighboring cell, physical downlink control channel PDCCH performance information for controlling PDCCH interference coordination. In addition, the first base station provided in the embodiment of the present invention further includes general functional units of a base station, such as a mobile signal transceiving unit, a radio frequency processing unit and a baseband processing unit, and the details will not be described herein again because they do not belong to the improvements of the present invention.

FIG. 9 is a schematic structural diagram of another first base station according to an embodiment of the present invention, in this embodiment, the first base station, on the basis of the structure of the foregoing first base station, further includes: a symbol increasing unit 91, configured to increase, by the first base station, the number of OFDM symbols occupied by a PDCCH of the first base station, when a PDCCH block error rate of the first base station is above a preset threshold, so as to further improve the PDCCH performance of the first base station. Refer to description of the foregoing method embodiments for details.

FIG. 10 is a schematic structural diagram of another wireless communication system according to an embodiment of the present invention, the system includes a first base station 101 and a second base station 102, the first base station 101 and the second base station 102 are mutual neighboring cell base station, and PDCCH performance information exchanged by the first base station 101 and the second base station 102 is used for controlling PDCCH interference coordination. The first base station 101 can be any first base station provided in the above embodiments, and the second base station 102 can be any second base station provided in the above embodiments. Refer to description of the foregoing method embodiments for details.

The wireless communication system provided in the embodiment of the present invention can further include a UE, the UE is one service object of the second base station 102, and the UE and the second base station are in wireless communication connection. The UE receives a notification transmitted by the second base station 102, so that the UE can know an accurate starting position of the PDSCH transmitted by the second base station 102.

Other embodiments:

Embodiment 1, a method for coordinating physical downlink control channel interference, includes:

exchanging, by a first base station with a neighboring cell base station, physical downlink control channel PDCCH state information for controlling PDCCH interference coordination.

Embodiment 2, the method for coordinating physical downlink control channel interference as described in embodiment 1, further includes:

finding, by the first base station, an aggressive cell base station of the first base station from the neighboring cell base station according to the PDCCH state information exchanged with the neighboring cell base station, when a PDCCH block error rate of the first base station is above a preset threshold;

transmitting, by the first base station, to the aggressive cell base station, an indication message for reducing PDCCH interference;

taking, by the aggressive cell base station, a corresponding measure according to the indication message, to reduce interference to a PDCCH of the first base station.

Embodiment 3, the method for coordinating physical downlink control channel interference as described in embodiment 2, before transmitting, by the first base station, to the aggressive cell base station, the indication message for reducing the PDCCH interference, further includes:

increasing, by the first base station, the number of OFDM symbols occupied by a PDCCH of the first base station.

Embodiment 4, the method for coordinating physical downlink control channel interference as described in embodiment 2 or 3, taking, by the aggressive cell base station, a corresponding measure according to the indication message, to reduce interference to a PDCCH of the first base station, includes:

increasing, by the aggressive cell base station, the number of OFDM symbols occupied by a PDCCH of the aggressive cell base station according to the indication message, so as to reduce the interference to the PDCCH of the first base station.

Embodiment 5, the method for coordinating physical downlink control channel interference as described in embodiment 3, further includes: reducing, by the first base station, the number of the OFDM symbols occupied by the PDCCH of the first base station, when the PDCCH block error rate falls below the preset threshold.

Embodiment 6, the method for coordinating physical downlink control channel interference as described in embodiment 5, after reducing, by the first base station, the OFDM symbols occupied by the PDCCH of the first base station, further includes:

transmitting, by the first base station, to the aggressive cell base station, an indication message for canceling the measure;

reducing, by the aggressive cell base station, the number of the OFDM symbols occupied by a PDCCH of the aggressive cell base station according to the indication message.

Embodiment 7, the method for coordinating physical downlink control channel interference as described in embodiment 2 or 3, taking, by the aggressive cell base station, a corresponding measure according to the indication message, to reduce interference to a PDCCH of the first base station, includes:

emptying, by the aggressive cell base station, a part of OFDM symbols according to the indication message, where the part of OFDM symbols include OFDM symbols from an OFDM symbol numbered by the number of OFDM symbols occupied by a PDCCH of the aggressive cell base station to an OFDM symbol numbered by a maximum number of OFDM symbols that the PDCCH of the aggressive cell base station can occupy.

Embodiment 8, the method for coordinating physical downlink control channel interference as described in embodiment 7, further includes: notifying, by the aggressive cell base station, a user equipment of a starting OFDM symbol of a physical downlink shared channel PDSCH transmitted to the user equipment.

Embodiment 9, a method for coordinating physical downlink control channel interference, includes:

exchanging, by a second base station, with a neighboring cell base station, physical downlink control channel PDCCH performance information for controlling PDCCH interference coordination.

Embodiment 10, the method for coordinating physical downlink control channel interference as described in embodiment 9, further includes:

finding, by the second base station, a victim cell base station from the neighboring cell base station according to the exchanged PDCCH performance information;

taking, by the second base station, a corresponding measure to reduce interference to a PDCCH of the victim cell base station.

Embodiment 11, the method for coordinating physical downlink control channel interference as described in embodiment 10, taking, by the second base station, a corresponding measure to reduce interference to a PDCCH of the victim cell base station, includes: increasing, by the second base station, a number of OFDM symbols occupied by a PDCCH of the second base station.

Embodiment 12, the method for coordinating physical downlink control channel interference as described in embodiment 11, further includes:

reducing, by the second base station, the number of the OFDM symbols occupied by the PDCCH of the second base station, when knowing that a PDCCH block error rate of the victim cell base station falls below a preset threshold.

Embodiment 13, the method for coordinating physical downlink control channel interference as described in embodiment 10, taking, by the second base station, a corresponding measure to reduce interference to a PDCCH of the victim cell base station, includes:

emptying, by the second base station, a part of OFDM symbols, where the part of OFDM symbols include OFDM symbols from an OFDM symbol numbered by a number of OFDM symbols occupied by a PDCCH of the second base station to an OFDM symbol numbered by a maximum number of OFDM symbols that the PDCCH of the second base station can occupy.

Embodiment 14, the method for coordinating physical downlink control channel interference as described in embodiment 13, further includes:

notifying, by the second base station, a user equipment of a starting OFDM symbol of a PDSCH transmitted to the user equipment.

Embodiment 15, the method for coordinating physical downlink control channel interference as described in any of embodiments 9-14, further includes:

increasing, by a victim cell base station, a number of OFDM symbols occupied by a PDCCH of the victim cell base station, when a PDCCH block error rate of the victim cell base station is above a preset threshold.

Embodiment 16, a first base station, includes:

an exchanging unit, configured to exchange with a neighboring cell base station, physical downlink control channel PDCCH state information for controlling PDCCH interference coordination.

Embodiment 17, the first base station as described in embodiment 16, further includes:

an aggressive cell finding unit, configured to, when a PDCCH block error rate of the first base station is above a preset threshold, find an aggressive cell base station of the first base station from the neighboring cell base station according to the PDCCH state information exchanged with the neighboring cell base station;
a first indicating unit, configured to transmit to the aggressive cell base station, an indication message for reducing PDCCH interference, so that the aggressive cell base station take a corresponding measure according to the indication message to reduce interference to a PDCCH of the first base station.

Embodiment 18, the first base station as described in embodiment 17, further includes:

a symbol increasing unit, configured to, before the first indicating unit transmits to the aggressive cell base station, the indication message for reducing the PDCCH interference, increase a number of OFDM symbols occupied by a PDCCH of the first base station.

Embodiment 19, the first base station as described in embodiment 18, further includes:

a symbol reducing unit, configured to, when the PDCCH block error rate falls below the preset threshold, reduce the number of the OFDM symbols occupied by the PDCCH of the first base station.

Embodiment 20, the first base station as described in embodiment 19, further includes:

a second indicating unit, configured to, after the symbol reducing unit reduces the OFDM symbols occupied by the PDCCH of the first base station, transmit to the aggressive cell base station, an indication message for canceling the measure, so that the aggressive cell base station reduces a number of OFDM symbols occupied by a PDCCH of the aggressive cell base station.

Embodiment 21, a second base station, includes:

an exchanging unit, configured to exchange with a first base station of a neighboring cell, physical downlink control channel PDCCH state information for controlling PDCCH interference coordination.

Embodiment 22, the second base station as described in embodiment 21, further includes:

a first indication receiving unit, configured to receive an indication message for reducing PDCCH interference transmitted by the first base station;
a processing unit, configured to take a corresponding measure according to the indication message, to reduce interference to a PDCCH of the first base station.

Embodiment 23, the second base station as described in embodiment 22, the processing unit is specifically configured to increase a number of OFDM symbols occupied by a PDCCH of the second base station according to the indication message, so as to reduce the interference to the PDCCH of the first base station.
Embodiment 24, the second base station as described in embodiment 23, further includes:

a second indication receiving unit, configured to receive an indication message for canceling the measure transmitted by the first base station;
a symbol reducing unit, configured to reduce the number of the OFDM symbols occupied by the PDCCH of the second base station according to the indication message.

Embodiment 25, the second base station as described in embodiment 22, the processing unit is specifically configured to empty a part of OFDM symbols according to the indication message, where the part of OFDM symbols include OFDM symbols from an OFDM symbol numbered by a number of OFDM symbols occupied by a PDCCH of an aggressive cell base station to an OFDM symbol numbered by a maximum number of OFDM symbols that the PDCCH of the aggressive cell base station can occupy.
Embodiment 26, the second base station as described in embodiment 25, further includes:

a symbol notifying unit, configured to notify a user equipment of a starting OFDM symbol of a physical downlink shared channel PDSCH transmitted to the user equipment.

Embodiment 27, a user equipment for coordinating physical downlink control channel interference, includes:

a notification receiving unit, configured to receive a starting OFDM symbol which is notified by a second base station and of a physical downlink shared channel PDSCH transmitted to the user equipment.

Embodiment 28, a wireless communication system, includes a first base station according to any one of embodiments 16 to 20, a second base station according to any one of embodiments 21 to 26, and a user equipment for coordinating physical downlink control channel interference according to embodiment 27, where the second base station is a neighboring cell base station of the first base station, and the user equipment is in wireless communication connection with the second base station.
Embodiment 29, a second base station, includes:

an exchanging unit, configured to exchange with a neighboring cell base station, physical downlink control channel PDCCH performance information for controlling PDCCH interference coordination.

Embodiment 30, the second base station as described in embodiment 29, further includes:

a victim cell finding unit, configured to find a victim cell base station from the neighboring cell base station according to the exchanged PDCCH performance information;
a processing unit, configured to take a corresponding measure to reduce interference to a PDCCH of the victim cell base station.

Embodiment 31, the second base station as described in embodiment 30, the processing unit is specifically configured to increase a number of OFDM symbols occupied by a PDCCH of the second base station.

Embodiment 32, the second base station as described in embodiment 31, further includes:

a symbol reducing unit, configured to reduce the number of the OFDM symbols occupied by the PDCCH of the second base station, when knowing that a PDCCH block error rate of the victim cell base station falls below a preset threshold.

Embodiment 33, the second base station as described in embodiment 30, the processing unit is specifically configured to empty a part of OFDM symbols, where the part of OFDM symbols include OFDM symbols from an OFDM symbol numbered by a number of OFDM symbols occupied by a PDCCH of the second base station to an OFDM symbol numbered by a maximum number of OFDM symbols that the PDCCH of the second base station can occupy.

Embodiment 34, the second base station as described in embodiment 33, further includes:

a symbol notifying unit, configured to notify a user equipment of a starting OFDM symbol of a physical downlink shared channel PDSCH transmitted to the user equipment.

Embodiment 35, a first base station, includes:

an exchanging unit, configured to exchange with a second base station of a neighboring cell, physical downlink control channel PDCCH performance information for controlling PDCCH interference coordination.

Embodiment 36, the first base station as described in embodiment 35, further includes:

a symbol increasing unit, configured to increase, by the first base station, a number of OFDM symbols occupied by a PDCCH of the first base station, when a PDCCH block error rate of the first base station is above a preset threshold.

Embodiment 37, a wireless communication system includes a second base station according to any one of embodiments 29 to 34, a first base station according to embodiment 35 or 36, and the first base station is a neighboring cell base station of the second base station.

Finally, it should be noted that the above embodiments are merely provided for describing the technical solutions of the present invention, but not intended to limit the present invention. It should be understood by persons skilled in the art that although the present invention has been described in detail with reference to the foregoing embodiments, modifications can be made to the technical solutions described in the foregoing embodiments, or equivalent replacements can be made to some technical features in the technical solutions; however, such modifications or replacements do not cause the essence of corresponding technical solutions to depart from the scope of the embodiments of the present invention.

**Claims**

1. A method for coordinating physical downlink control channel interference, comprising:

exchanging, by a base station, with a neighboring cell base station, physical downlink control channel PDCCH performance information.

2. The method according to claim 1, further comprising:

when the exchanged PDCCH performance information reflects that a PDCCH of the neighboring cell base station suffers an interference problem, increasing, by the base station, a number of OFDM symbols occupied by a PDCCH of the base station.

3. The method according to claim 1, further comprising:

when the exchanged PDCCH performance information reflects that a PDCCH of the neighboring cell base station suffers an interference problem, emptying, by the base station, a part of OFDM symbols, wherein the part of OFDM symbols comprise OFDM symbols from an OFDM symbol numbered by a number of OFDM symbols occupied by a PDCCH of the base station to an OFDM symbol numbered by a maximum number of OFDM symbols that the PDCCH of the base station can occupy.

4. The method according to claim 3, further comprising:

notifying, by the base station, a user equipment of a starting OFDM symbol of a physical downlink shared channel PDSCH transmitted to the user equipment.

5. The method according to any one of claims 1 to 4, wherein the PDCCH performance information comprises a PDCCH block error rate.

6. The method according to claim 5, further comprising:

reducing, by the base station, a number of OFDM symbols occupied by a PDCCH of the base station, when the base station knows that the PDCCH block error rate of the neighboring cell base station falls below a preset threshold according to the PDCCH performance information exchanged with the neighboring cell base station.

7. A method for coordinating physical downlink control channel interference, comprising:

exchanging, by a base station, with a neighboring cell base station, physical downlink control channel PDCCH state information.

8. The method according to claim 7, further comprising:

when a PDCCH block error rate of the base station is above a preset threshold, finding, by the base station, an aggressive cell base station of the base station from the neighboring cell base station according to the PDCCH state information exchanged with the neighboring cell base station;
transmitting, by the base station, to the aggressive cell base station, an indication message for reducing PDCCH interference, wherein the indication message is used to instruct the aggressive cell base station to take a corresponding measure to reduce interference to a PDCCH of the base station.

9. The method according to claim 8, wherein the corresponding measure comprises:

increasing a number of OFDM symbols occupied by a PDCCH of the aggressive cell base station, so as to reduce the interference to the PDCCH of the base station.

10. The method according to claim 8, wherein the corresponding measure comprises:

emptying, by the aggressive cell base station, a part of OFDM symbols, wherein the part of OFDM symbols comprise OFDM symbols from an OFDM symbol numbered by a number of OFDM symbols occupied by a PDCCH of the aggressive cell base station to an OFDM symbol numbered by a maximum number of OFDM symbols that the PDCCH of the aggressive cell base station can occupy.

11. The method according to claim 8, before transmitting, by the base station, to the aggressive cell base station, the indication message for reducing the PDCCH interference, further comprising:

increasing, by the base station, a number of OFDM symbols occupied by a PDCCH of the base station.

12. The method according to claim 11, further comprising: reducing, by the base station, the number of the OFDM symbols occupied by the PDCCH of the base station, when the PDCCH block error rate falls below the preset threshold.

13. The method according to claim 12, after reducing, by the base station, the number of the OFDM symbols occupied by the PDCCH of the base station, further comprising:

transmitting, by the base station, to the aggressive cell base station, an indication message for canceling the measure, wherein the indication message is used to instruct the aggressive cell base station to reduce a number of OFDM symbols occupied by a PDCCH of the aggressive cell base station.

14. Abase station, comprising:

an exchanging unit, configured to exchange with a neighboring cell base station, physical downlink control channel PDCCH performance information.

15. The base station according to claim 14, further comprising:

a processing unit, configured to, when the exchanged PDCCH performance information reflects that a PDCCH of the neighboring cell base station suffers an interference problem, increase a number of OFDM symbols occupied by a PDCCH of the base station.

16. The base station according to claim 14, further comprising:

a processing unit, configured to, when the exchanged PDCCH performance information reflects that a PDCCH of the neighboring cell base station suffers an interference problem, empty a part of OFDM symbols, wherein the part of OFDM symbols comprise OFDM symbols from an OFDM symbol numbered by a number of OFDM symbols occupied by a PDCCH of the base station to an OFDM symbol numbered by a maximum number of OFDM symbols that the PDCCH of the base station can occupy.

17. The base station according to claim 16, further comprising:

a symbol notifying unit, configured to notify a user equipment of a starting OFDM symbol of a physical downlink shared channel PDSCH transmitted to the user equipment.

18. The base station according to any one of claims 14 to 17, wherein the PDCCH performance information comprises a PDCCH block error rate.

19. The base station according to claim 18, further comprising:

a symbol reducing unit, configured to, when knowing that the PDCCH block error rate of the neighboring cell base station falls below a preset threshold according to the PDCCH performance information exchanged with the neighboring cell base station, reduce a number of OFDM symbols occupied by a PDCCH of the base station.

20. A wireless communication system, comprising a first base station, and a second base station according to any one of claims 14 to 19, wherein the first base station is a neighboring cell base station of the second base station.

The first base station exchanges with a neighboring cell base station, physical downlink control channel PDCCH state information for controlling PDCCH interference coordination

When a PDCCH block error rate of the first base station is above a preset threshold, the first base station finds an aggressive cell base station of the first base station from the neighboring cell base station according to the PDCCH state information exchanged with the neighboring cell base station — 11

The first base station transmits, to the aggressive cell base station, an indication message for reducing PDCCH interference — 12

The aggressive cell base station takes a corresponding measure according to the indication message, to reduce the interference to the PDCCH of the first base station — 13

FIG. 1

#0  #1  #2  #3  #4  #5  #6

Macro cell
(macro cell)

Pico cell
(pico cell)

PDCCH

PDSCH

Empty
(Empty)

FIG. 2

A second base station exchanges, with a neighboring cell base station, PDCCH performance information for controlling PDCCH interference coordination

The second base station finds a victim cell base station from the neighboring cell base station according to the exchanged PDCCH performance information ⌇ 31

The second base station takes a corresponding measure to reduce the interference to the PDCCH of the victim cell base station ⌇ 32

FIG. 3

| | |
|---|---|
| A certain base station determines that its own PDCCH performance is too poor, and increases the number of OFDM symbols occupied by its own PDCCH | 41 |

↓

| | |
|---|---|
| The base station finds the aggressive cell base station | 42 |

↓

| | |
|---|---|
| The base station notifies the aggressive cell base station of taking a certain measure to adjust interference to the PDCCH of the base station | 43 |

↓

| | |
|---|---|
| After receiving the indication message, the aggressive cell base station increases the number of OFDM symbols occupied by its own PDCCH to $N_{Max}$ | 44 |

↓

| | |
|---|---|
| When finding its own PDCCH performance is improved, the base station cancels the previous action of increasing the number of the OFDM symbols occupied by the PDCCH | 45 |

↓

| | |
|---|---|
| The base station transmits an indication message to the aggressive cell base station, to notify the aggressive cell base station of making the PDCCH of the aggressive cell return to a dynamic mode from a fixed mode | 46 |

↓

| | |
|---|---|
| The aggressive cell base station dynamically adjusts the number of OFDM symbols occupied by the PDCCH according to a PDSCH scheduling situation | 47 |

FIG. 4

Exchanging unit

Aggressive cell finding unit ⌇51

First indicating unit ⌇52

FIG. 5

Exchanging unit

Second base station

First indication receiving unit ⌇61

Processing unit ⌇62

Symbol notifying unit ⌇63

Second indication receiving unit ⌇64

Symbol reducing unit ⌇65

FIG. 6

71

First base
station

72

Second base
station

73

UE

FIG. 7

Exchanging unit

81

Victim cell finding unit

82

Processing unit

FIG. 8

Exchanging unit

91

Symbol increasing unit

FIG. 9

101

First base
station

102

Second base
station

FIG. 10

# INTERNATIONAL SEARCH REPORT

| | International application No. |
|---|---|
| | PCT/CN2012/081172 |

**A. CLASSIFICATION OF SUBJECT MATTER**

H04W 72/08 (2009.01) i

According to International Patent Classification (IPC) or to both national classification and IPC

**B. FIELDS SEARCHED**

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNABS, VEN: PDCCH, OFDM, neighbor, disturb+, interfere+, exchange, symbol, BLER

**C. DOCUMENTS CONSIDERED TO BE RELEVANT**

| Category* | Citation of document, with indication, where appropriate, of the relevant passages | Relevant to claim No. |
|---|---|---|
| X | CN 102104965 A(ZTE CORP) 22 June 2011 (22.06.2011) description, paragraphs [0039]-[0073] | 1-7, 14-20 |
| A | As above, the whole document | 8-13 |
| A | US 2011269493 A1 (INTEL CORP) 03 Nov. 2011 (03.11.2011) the whole document | 1-20 |
| A | CN 102143593 A (INST TELECOM SCI&TECHNOLOGY) 03 Aug. 2011 (03.08.2011) the whole document | 1-20 |

☐ Further documents are listed in the continuation of Box C.   ☒ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&" document member of the same patent family |

| Date of the actual completion of the international search | Date of mailing of the international search report |
|---|---|
| 08 Nov. 2012 (08.11.2012) | 22 Nov. 2012 (22.11.2012) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer BIAN, Xiaofei Telephone No. (86-10) 62411330 |
|---|---|

Form PCT/ISA /210 (second sheet) (July 2009)

## INTERNATIONAL SEARCH REPORT
### Information on patent family members

| International application No. |
|---|
| PCT/CN2012/081172 |

| Patent Documents referred in the Report | Publication Date | Patent Family | Publication Date |
|---|---|---|---|
| CN 102104965 A | 22.06.2011 | None | |
| US 2011269493 A1 | 03.11.2011 | EP 2385654 A2 | 09.11.2011 |
| | | CN 102238744 A | 09.11.2011 |
| CN 102143593 A | 03.08.2011 | WO 2012130081 A1 | 04.10.2012 |

Form PCT/ISA /210 (patent family annex) (July 2009)